# EUROPÄISCHE PATENTSCHRIFT

(11) **EP 2 809 700 B1**
(45) Veröffentlichungstag und Bekanntmachung des Hinweises auf die Patenterteilung: **19.09.2018**
(21) Anmeldenummer: 13701643.2
(22) Anmeldetag: 30.01.2013
(51) Int. Cl.: C08G 18/09, C08G 18/10, C08G 18/40, C08G 18/48, C08G 18/50

(54) **VERBUNDELEMENTE MIT VERBESSERTER DIMENSIONSSTABILITÄT**
COMPOUND ELEMENTS WITH IMPROVED DIMENSIONAL STABILITY
ELÉMENTS COMPOSITES DOTÉS D'UNE STABILITÉ DE DIMENSIONS AMÉLIORÉE

(30) Priorität: 02.02.2012 EP 12153611
(43) Veröffentlichungstag der Anmeldung: 10.12.2014
(73) Patentinhaber: Covestro Deutschland AG, 51373 Leverkusen (DE)
(72) Erfinder: ROERS, Rolf, 51519 Odenthal (DE); HAGEN, Torsten, 45257 Essen (DE); ABELS, Rene, 51061 Köln (DE); TINNEFELD, Inge, 50737 Köln (DE); SCHINDLER, Walter, 51399 Burscheid (DE)
(74) Vertreter: Levpat
(86) Internationale Anmeldenummer: PCT/EP2013/051759
(87) Internationale Veröffentlichungsnummer: WO 2013/113741

(56) Entgegenhaltungen:
- WO-A2-02/50161
- GB-A- 2 313 838
- US-A- 4 555 418
- US-A- 5 214 076

## Beschreibung

Die vorliegende Erfindung betrifft einen Polyurethan/Polyisocyanuratschaum mit verbesserter Dimensionsstabilität. Sie betrifft weiterhin dessen Verwendung zur Herstellung von Metallverbundelementen, hiermit hergestellte Metallverbundelemente und ein Verfahren zur Herstellung der Metallverbundelemente.

Metallsandwichelemente auf der Basis von Polyurethan- (PU)-Hartschaumstoffen, also sowohl Polyurethan- (PUR) als auch Polyisocyanurat- (PIR)-Hartschaumstoffen zeigen wünschenswerte Eigenschaften in Hinblick auf die Wärmeisolation und das Brandverhalten auf. Aufgrund dieser Eigenschaft eignen sich die Metallsandwichelemente, die auch Verbundelemente genannt werden, zur Verwendung im Industriehallenbau. Insbesondere werden Verbundelemente zum Bau von Kühlhäusern verwendet. Die Verbundelemente sind dabei dauerhaft tiefen Temperaturen im Bereich von 0 °C bis -30 °C ausgesetzt. Allerdings hat sich gezeigt, dass Verbundelemente bei dauerhafter Verwendung unter diesen Bedingungen in Bezug auf ihre Dicke schrumpfen. Diese Schrumpfung führt dann unter anderem zu unerwünschten Spannungen in den mit den Verbundelementen errichteten Gebäuden und zu Versatz zwischen einzelnen Verbundelementen und damit verbundenen optischen Mängeln.

Wünschenswert wären daher Verbundelemente, die eine verbesserte Dimensionsstabilität zeigen und gleichzeitig weiterhin die vorteilhaften Eigenschaften von bisher kommerziell erhältlichen Verbundelementen in Bezug auf Wärmeisolation und Brandverhalten aufweisen.

US 4,555,418 offenbart die Herstellung von Polyisocyanurat-Schäumen unter Verwendung von aromatischen Polyetherpolyolen und aromatischen Polyesterpolyolen. Die offenbarten Polyisocyanurat-Schäume können als Verbundelement verwendet werden und weisen eine verbesserte Haftung auf, wobei die eingesetzten Polyesterpolyole jedoch für Polyurethan/Polyisocyanurat-Schäume mit einem verbesserten Brandverhalten zu hohe Hydroxylzahlen aufweisen.

Die vorstehend genannten Eigenschaften der Verbundelemente werden maßgeblich von dem zur Herstellung der Verbundelemente verwendeten Polyurethan/Polyisocyanurat-Schaum bestimmt.

Eine Aufgabe der vorliegenden Erfindung ist daher die Bereitstellung von Polyurethan/Polyisocyanurat-Schäumen, die bei der Verarbeitung zu Verbundelementen führen, die eine verbesserte Dimensionsstabilität zeigen und gleichzeitig weiterhin die vorteilhaften Eigenschaften von konventionellen Verbundelementen in Bezug auf Wärmeisolation und Brandverhalten aufweisen.

Die vorstehend genannte Aufgabe wird durch die Zurverfügungstellung eines Polyurethan/ Polyisocyanurat-Schaums gelöst, wobei der Polyurethan-/Polyisocyanurat-Schaum erhältlich ist aus der Reaktion von
A) einer isocyanatreaktiven Zusammensetzung umfassend
   A1) 0 bis 15 Gew.-% wenigstens eines Polyesterpolyols mit einer Hydroxylzahl im Bereich von 300 mg KOH/g bis 1000 mg KOH/g bestimmt gemäß DIN 53240,
   A2) 1 bis 15 Gew.-% wenigstens eines Polyetherpolyols mit einer Hydroxylzahl im Bereich von 300 mg KOH/g bis 600 mg KOH/g bestimmt gemäß DIN 5324
      und
   A3) 50 bis 70 Gew.-% wenigstens eines Polyesterpolyols mit einer Hydroxylzahl im Bereich von 80 mg KOH/g bis 290 mg KOH/g bestimmt gemäß DIN 53240,
   wobei die Angaben in Gew.-% jeweils auf alle Komponenten der isocyanatreaktiven Zusammensetzung A) bezogen sind;
   mit
B) einer Polyisocyanatkomponente,
   wobei das Äquivalentverhältnis von NCO-Gruppen zur Summe der gegenüber NCO-Gruppen reaktiven Wasserstoffatome ≥ 150:100 bis ≤ 500:100 beträgt,
   dadurch gekennzeichnet, dass das Polyetherpolyol A2) ein mit einem aromatischen Amin gestartetes Polyetherpolyol A2) ist.

Es ist weiterhin erfindungsgemäß vorgesehen, dass das Äquivalentverhältnis von NCO-Gruppen zur Summe der gegenüber NCO-Gruppen reaktiven Wasserstoffatome vorzugsweise ≥ 150:100 bis ≤ 400:100 beträgt. Dieses Verhältnis kann besonders bevorzugt auch ≥ 200:100 bis ≤ 400:100 betragen.

Bevorzugt weist die isocyanatreaktive Zusammensetzung 1 bis 10 Gew.-% wenigstens eines Polyesterpolyols A1), 1 bis 10 Gew.-% wenigstens eines Polyetherpolyols A2) und 50 bis 70 Gew.-% wenigstens eines Polyesterpolyols A3) auf.

Das Polyesterpolyol A1) kann beispielsweise ein Polykondensat aus Polyolen und aromatischen Di- sowie gegebenenfalls Tri- und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Polyole umfassen Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolethan, Hexantriol-(1,2,6), Butantriol-(1,2,4), Chinol, Methylglucosid, Triethylenglykol, Tetraethylenglykol und höhere Polyethylenglykole, Dipropylenglykol und höhere Polypropylenglykole, Diethylenglykol, Glycerin, Pentaerythrit, Trimethylolpropan, Sorbit, Mannit, Dibutylenglykol und höhere Polybutylenglykole. Besonders geeignete Polyole sind Alkylenglykole und Oxyalkylenglykole, zum Beispiel Ethylenglykol, Diethylenglykol, Dipropylenglykol, Triethylenglykol, Tripropylenglykol, Tetraethylenglykol, Tetrapropylenglykol, Trimethylenglykol, Tetramethylenglykol und 1,4-Cyclohexandimethanol (1,4-Bis-hydroxymethylcyclohexan).

Als aromatische Dicarbonsäuren können beispielsweise Phthalsäure, Isophthalsäure, Terephthalsäure und/oder Tetrachlorphthalsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines aromatischen Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Bevorzugt wird das Polyesterpolyol A1) aus Phthalsäureanhydrid und Diethylenglykol erhalten.

Das Polyesterpolyol A1) weist vorzugsweise eine Hydroxylzahl von ≥ 300 mg KOH/g bis ≤ 850 mg KOH/g und besonders bevorzugt ≥ 400 mg KOH/g bis ≤ 850 mg KOH/g auf. Im Rahmen der vorliegenden Erfindung lassen sich Hydroxylzahlen generell anhand DIN 53240 bestimmen. Die durchschnittliche Funktionalität dieses Polyesterpolyols A1) ist vorteilhafterweise ≥ 1,8 bis ≤ 2,2. Das gewichtsmittlere Molekulargewicht der Polyesterpolyole A1) liegt vorzugsweise im Bereich zwischen 150 g/mol und 400g/mol, besonders bevorzugt im Bereich zwischen 150 g/mol und 300 g/mol, bestimmt gemäß DIN 55672-1

Das Polyetherpolyol A2) weist vorzugsweise eine Hydroxylzahl von ≥ 320 mg KOH/g bis ≤ 550 mg KOH/g und besonders bevorzugt ≥ 350 mg KOH/g bis ≤ 500 mg KOH/g auf. Im Rahmen der vorliegenden Erfindung lassen sich Hydroxylzahlen generell anhand DIN 53240 bestimmen. Das Polyetherpolyol A2) wird durch Umsetzung wenigstens eines aromatischen Amins mit mindestens einem Alkylenoxid hergestellt. Bevorzugte aromatische Amine werden ausgewählt aus der Gruppe bestehend aus Toluylendiamin, Diaminodiphenylmethan und Polymethylen-polyphenylen-polyamin.

Als Alkylenoxid kann bevorzugt Ethylenoxid, Propylenoxid oder ein Gemisch davon verwendet werden. Ethylenoxid ist besonders bevorzugt.

Die durchschnittliche Funktionalität dieses Polyetherpolyols A2) ist bevorzugt 4. Das gewichtsmittlere Molekulargewicht der Polyetherpolyole A2) liegt vorzugsweise im Bereich zwischen 300 g/mol und 1000 g/mol, besonders bevorzugt im Bereich zwischen 350 g/mol und 800 g/mol, bestimmt gemäß DIN 55672-1.

Die Polyetherpolyole A2) werden nach bekannten Verfahren hergestellt, wie beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines aromatischen Amins als Startermoleküls mit einem oder mehreren Alkylenoxiden mit 2 bis 4 Kohlenstoffatomen im Alkylenrest.

Das Polyesterpolyol A3) kann ein Polykondensat aus wenigstens einem Carbonsäureanhydrid, Diethylenglykol, wenigstens einem weiteren C₂-C₄ Glykol, ausgenommen Diethylenglykol, und wenigstens einer aliphatischen C₅ - C₁₂ Dicarbonsäure sein. Alternativ kann das Polyesterpolyol A3) ein Polykondensat aus wenigstens einem Carbonsäureanhydrid, Diethylenglykol, wenigstens einem C₅ - C₁₀ Glykol und wenigstens einer C₄ Dicarbonsäure sein.

In einer bevorzugten Ausführungsform ist das Carbonsäureanhydrid (A) aromatisch. Vorzugsweise wird das Carbonsäureanhydrid (A) ausgewählt aus der Gruppe bestehend aus Phthalsäureanhydrid, Trimellitsäureanhydrid und Pyromellitsäureanhydrid. Besonders bevorzugt ist das Carbonsäureanhydrid Phthalsäureanhydrid.

Vorzugsweise wird das C₂-C₄ Glykol ausgewählt aus der Gruppe bestehend aus Ethylenglykol, 1,3-Propandiol, 2-Methyl-1,3-propandiol, 1,2-Propandiol. Besonders bevorzugt ist das C₂-C₄ Glykol Ethylenglykol. Vorzugsweise wird die aliphatische C₅-C₁₂ Dicarbonsäure ausgewählt aus der Gruppe bestehend aus Glutarsäure, Adipinsäure, Pimelinsäure, Korksäure, Azelainsäure, Sebacinsäure, Undecandisäure und Dodecandisäure. Besonders bevorzugt ist als C₅-C₁₂ Dicarbonsäure Adipinsäure oder Sebacinsäure. Vorzugsweise wird das C₅-C₁₀ Glykol ausgewählt aus der Gruppe bestehend aus 1,5-Pentandiol, 3-Methyl-1,5-pentandiol, 1,6-Hexandiol und 1,8-Octandiol. Besonders bevorzugt ist das C₅-C₁₀ Glykol 3-Methyl-1,5-pentandiol oder 1,6-Hexandiol. Vorzugsweise ist die C₄ Dicarbonsäure ausgewählt aus der Gruppe bestehend aus Bernsteinsäure, Fumarsäure und Maleinsäure. Besonders bevorzugt ist die C₄ Dicarbonsäure Bernsteinsäure.

Besonders bevorzugt ist das Polyesterpolyol A3) ein Polykondensat aus Phthalsäureanhydrid, Diethylenglykol, Adipinsäure und Ethylenglykol.

Das Polyesterpolyol A3) weist vorzugsweise eine Hydroxylzahl von ≥ 100 mg KOH/g bis ≤ 290 mg KOH/g und besonders bevorzugt ≥ 180 mg KOH/g bis ≤ 290 mg KOH/g betragen. Das gewichtsmittlere Molekulargewicht der Polyesterpolyole A3) liegt vorzugsweise im Bereich zwischen 350 g/mol und 750 g/mol, besonders bevorzugt im Bereich zwischen 370 g/mol und 620 g/mol, bestimmt gemäß DIN 55672-1.

Die mittlere Funktionalität der Polyesterpolyole A3) liegt vorzugsweise im Bereich von 1,9 bis 3. Funktionalitäten größer 2 werden dadurch erhalten, dass Bausteine mit Funktionalitäten größer 2, beispielsweise Triole oder Tetraole und/oder Tri- oder Tetracarbonsäuren und/oder trifunktionelle Hydroxycarbonsäuren bei der Veresterung anteilig mit verwendet werden. Typische Vertreter sind Glycerin, 1,1,1,-Trimethylolpropan, Pentaerythrit, Trimellitsäure, Trimesinsäure, Äpfelsäure, Weinsäure, Zitronensäure, Dimethylolpropionsäure, etc. Bevorzugt lässt sich eine mittlere Funktionalität im Bereich von 2,0 bis 2,3 durch Verwendung von Glycerin oder 1,1,1-Trimethylolpropan einstellen.

Die Polyisocyanatkomponente B) umfasst die in der Polyurethanchemie üblichen Polyisocyanate. In Betracht kommen im Allgemeinen aliphatische, cycloaliphatische, arylaliphatische und aromatische mehrwertige Isocyanate. Bevorzugt werden aromatische Di- und Polyisocyanate verwendet. Besonders bevorzugt umfasst die Polyisocyanatkomponente monomeres und/oder polymeres Diphenylmethandiisocyanat. Beispielsweise kann es sich hierbei um 2,2'-, 2,4'- und 4,4'-Diphenylmethandiisocyanat (MDI) sowie beliebige Gemische dieser Isomeren, Mischungen aus 2,2'-, 2,4'-, 4,4'-Diphenylmethandiisocyanaten (Zweikern-MDI) oder Polyphenylenpolymethylen-polyisocyanaten (polymeres MDI) handeln. Es ist möglich, dass in der Polyisocyanatkomponente B) noch weitere Polyisocyanate vorhanden sind. Bevorzugte Beispiele sind 2,4- und 2,6-Toluylendiisocyanat (TDI) sowie beliebige Gemische dieser Isomeren.

Zur Verbesserung der Brandbeständigkeit können den isocyanatreaktiven Zusammensetzungen zudem Flammschutzmittel C) zugesetzt werden, bevorzugt phosphorhaltige Verbindungen, besonders bevorzugt Phosphate und Phosphonate, sowie auch halogenierte Polyester und Polyole oder Chlorparaffine.

Besonders bevorzugt sind Flammschutzmittel C) ausgewählt aus der Gruppe bestehend aus Tris(1-chloro-2-propyl)-phosphat (TCPP) und Triethylphosphat (TEP). Bevorzugt werden Flammschutzmittel C) in einer Menge von 1 bis 30 Gew.-%, besonders bevorzugt 5 bis 30 Gew.-%, bezogen auf das Gesamtgewicht der isocyanatreaktiven Zusammensetzung eingesetzt.

Bevorzugt werden der isocyanatreaktiven Zusammensetzung Trimerisierungskatalysatoren D) zugesetzt. Trimerisierungkatalysatoren D) initiieren und beschleunigen die Trimerisierung von Isocyanatgruppen zu Isocyanuratgruppen.

Bevorzugt sind Trimerisierungskatalysatoren D) ausgewählt aus der Gruppe bestehend aus Ammonium, Alkali- oder Erdalkalimetallsalze von Carbonsäuren. Besonders bevorzugt sind Trimerisierungskatalysatoren D) ausgewählt aus der Gruppe bestehend aus Kaliumformiat, Kaliumacetat, Kalium (2 -ethylhexanoat), Ammoniumformiat, Ammoniumacetat, Ammonium (2-ethylhexanoat), [1- (N,N,N-Trimethylammonium)propan-2-ol] formiat und [1-(N,N,N-Trimethylammonium)propan-2-ol](2-ethylhexanoat) .

Vorzugsweise werden als Komponente D) Salze von Carbonsäuren, besonders bevorzugt Salze von Carbonsäuren mit 1 bis 20 Kohlenstoffatomen eingesetzt. Dabei kann es sich um lineare oder verzweigte, substituierte oder unsubstiutierte, gesättigte oder ungesättigte aliphatische oder aromatische Carbonsäuren handeln.

Die Trimerisierungskatalysatoren D) können einzeln oder als Gemisch eingesetzt werden.

Trimerisierungskatalysator D) wird in Mengen von bevorzugt 0,1 bis 10,0 Gew.-, besonders bevorzugt von 0,3 bis 6,0 Gew.-%, jeweils bezogen auf das Gesamtgewicht der isocyanatreaktiven Zusammensetzung, eingesetzt.

Bevorzugt werden den isocyanatreaktiven Zusammensetzungen Emulgatoren E) zuzugeben. Als geeignete Emulgatoren E), die auch als Schaumstabilisatoren dienen, können beispielsweise alle handelsüblichen durch Polyetherseitenketten modifizierten Siliconoligomere eingesetzt werden, die auch zur Herstellung von herkömmlichen Polyurethanschäumen eingesetzt werden. Falls Emulgatoren E) eingesetzt werden, handelt es sich um Mengen von bevorzugt bis zu 8 Gew.-%, besonders bevorzugt von 0,5 bis 7 Gew.-%, jeweils bezogen auf das Gesamtgewicht der isocyanatreaktiven Zusammensetzung. Bevorzugte Emulgatoren E) sind Polyetherpolysiloxancopolymerisate.

Die isocyanatreaktiven Zusammensetzungen können auch Verbindungen F) enthalten, die als physikalische Treibmittel dienen können. Als physikalische Treibmittel F) werden bevorzugt niedermolekulare Kohlenwasserstoffe wie z.B. n-Propan, n-Butan, n-Pentan, Cyclopentan, i-Pentan oder deren Gemische, Dimethylether, fluorierte Kohlenwasserstoffe wie 1,1- Difluorethan oder 1, 1, 1, 2-Tetrafluorethan oder CO₂ verwendet.

Die Schaumherstellung kann dabei gegebenenfalls ausschließlich durch die physikalischen Treibmittel F) erfolgen. Meist allerdings erfolgt die Schaumbildung durch eine zusätzliche Reaktion der Polyisocyanatkomponente mit der Komponente G) als chemischem Treibmittel. Dadurch kann die Menge des benötigten physikalischen Treibmittels F) reduziert werden oder es werden Schäume mit geringerer Dichte erhalten.

Besonders bevorzugt handelt es sich bei Komponente F) um niedermolekulare Kohlenwasserstoffe, ganz besonders bevorzugt um n-Pentan. Falls die isocyanatreaktiven Zusammensetzungen mit physikalischen Treibmitteln F) verschäumt werden, handelt es sich um Mengen von bevorzugt 0,1 bis 30 Gewichtsteilen, besonders bevorzugt 0,1 bis 25 Gewichtsteilen, insbesondere 0,1 bis 20 Gewichtsteilen, jeweils bezogen auf das Gesamtgewicht der isocyanatreaktiven Zusammensetzung.

Als chemische Treibmittel G) können beispielsweise Wasser oder Carbonsäuren wie Ameisensäure eingesetzt werden.

Falls Bestandteil G) eingesetzt wird, handelt es sich bevorzugt um Hydroxyverbindungen, wobei Wasser besonders bevorzugt und flüssig oder gasförmig sein kann.

Weiterhin können als Additive H) alle Zusatzstoffe eingesetzt werden, die auch bisher in isocyanatreaktiven Zusammensetzungen eingesetzt worden sind. Beispiele für Additive H) sind Zellregulantien, Thixotropiermittel, Weichmacher und Farbstoffe.

In einer bevorzugten Ausführungsform betrifft die vorliegende Erfindung einen Polyurethan-/Polyisocyanurat-Schaum erhältlich aus der Reaktion von
A) einer isocyanatreaktiven Zusammensetzung umfassend
   A1) 1 bis 10 Gew.-% wenigstens eines Polyesterpolyols mit einer Hydroxylzahl im Bereich von 300 mg KOH/g bis 1000 mg KOH/g bestimmt gemäß DIN 53240,
   A2) 1 bis 10 Gew.-% wenigstens eines Polyetherpolyols mit einer Hydroxylzahl im Bereich von von 300 mg KOH/g bis 600 mg KOH/g bestimmt gemäß DIN 53240,
   A3) 50 bis 70 Gew.-% wenigstens eines Polyesterpolyols mit einer Hydroxylzahl im Bereich von 80 mg KOH/g bis 290 mg KOH/g bestimmt gemäß DIN 53240,
C) 1 bis 30 Gew.-% wenigstens eines Flammschutzmittels,
D) 0,1 bis 6 Gew.-% wenigstens eines Trimerisierungskatalysators,
   wobei die Angaben in Gew.-% jeweils auf alle Komponenten der isocyanatreaktiven Zusammensetzung A) bezogen sind;
   mit
B) einem Gemisch von Diphenylmethan-4,4'-diisocyanat mit Isomeren und höherfunktionellen Homologen,
   wobei das Äquivalentverhältnis von NCO-Gruppen zur Summe der gegenüber NCO-Gruppen reaktiven Wasserstoffatome ≥ 150:100 bis ≤ 400:100 beträgt,
   dadurch gekennzeichnet, dass das Polyetherpolyol A2) ein mit einem aromatischen Amin gestartetes Polyetherpolyol A) ist.

In einer besonders bevorzugten Ausführungsform betrifft die vorliegende Erfindung einen Polyurethan-/Polyisocyanurat-Schaum erhältlich aus der Reaktion von
A) einer isocyanatreaktiven Zusammensetzung umfassend
   A1) 1 bis 10 Gew.-% wenigstens eines Polyesterpolyols mit einer Hydroxylzahl im Bereich von 300 mg KOH/g bis 1000 mg KOH/g bestimmt gemäß DIN 53240,
   A2) 1 bis 10 Gew.-% wenigstens eines Polyetherpolyols mit einer Hydroxylzahl im Bereich von von 300 mg KOH/g bis 600 mg KOH/g bestimmt gemäß DIN 53240,
   A3) 50 bis 70 Gew.-% wenigstens eines Polyesterpolyols mit einer Hydroxylzahl im Bereich von 80 mg KOH/g bis 290 mg KOH/g bestimmt gemäß DIN 53240,
C) 1 bis 30 Gew.-% wenigstens eines Flammschutzmittels,
D) 0,1 bis 6 Gew.-% wenigstens eines Trimerisierungskatalysators,
E) 0,5 bis 6 Gew.-% wenigstens eines Emulgators,
G) gegebenenfalls wenigstens ein chemisches Treibmittel,
H) gegebenenfalls wenigstens ein Additiv
F) wenigstens ein physikalisches Treibmittel
   wobei die Angaben in Gew.-% jeweils auf alle Komponenten der isocyanatreaktiven Zusammensetzung A) bezogen sind;
   mit
B) einem Gemisch von Diphenylmethan-4,4'-diisocyanat mit Isomeren und höherfunktionellen Homologen,
wobei das Äquivalentverhältnis von NCO-Gruppen zur Summe der gegenüber NCO-Gruppen reaktiven Wasserstoffatome ≥ 150:100 bis ≤ 400:100 beträgt,
dadurch gekennzeichnet, dass das Polyetherpolyol A2) ein mit einem aromatischen Amin gestartetes Polyetherpolyol A) ist.

In einer Ausführungsform der erfindungsgemäßen Polyurethan-/Polyisocyanurat-Schäume weist dieser eine Dichte von ≥ 30 kg/m³ bis ≤ 50 kg/m³ auf. Die Dichte wird gemäß DIN EN ISO 3386-1-98 bestimmt. Vorzugsweise liegt die Dichte in einem Bereich von ≥ 33 kg/m³ bis ≤ 45 kg/m³ und besonders bevorzugt von ≥ 36 kg/m³ bis ≤ 42 kg/m³.

Zur Herstellung der erfindungsgemäßen Polyurethan-/Polyisocyanurat-Schäume werden im Allgemeinen alle Komponenten über übliche Hoch- oder Niederdruckmischköpfe vermischt in solchen Mengen so zur Umsetzung gebracht, dass das Äquivalentverhältnis der NCO-Gruppen der gegenüber NCO-Gruppen reaktiven Wasserstoffatome ≥ 150:100 bis ≤ 500:100 beträgt.

Ein weiterer Gegenstand der vorliegenden Erfindung ist die Verwendung der erfindungsgemäßen Polyurethan-/Polyisocyanurat-Schäume zur Herstellung von Metallverbundelementen. Zu Details einzelner Ausführungsformen wird zur Vermeidung unnötiger Wiederholungen auf die Erläuterungen des erfindungsgemäßen Verfahrens verwiesen.

Metallverbundelemente sind Sandwich-Verbundelemente, bestehend aus wenigstens zwei Deckschichten und einer dazwischen liegenden Kernschicht. Im Besonderen bestehen Metall-Schaumstoff-Verbundelemente wenigstens aus zwei Deckschichten aus Metall und einer Kernschicht aus einem Schaumstoff, z.B. einem Polyurethan (PUR)-Hartschaumstoff, bzw. aus einem Polyurethan/Polyisocyanurat (PUR/PIR)-Hartschaumstoff. Derartige Metall-Schaumstoff-Verbundelemente sind aus dem Stand der Technik hinlänglich bekannt und werden auch als Metallverbundelemente bezeichnet. Zwischen der Kernschicht und den Deckschichten können weitere Schichten vorgesehen sein. Beispielsweise können die Deckschichten, z.B. mit einem Lack, beschichtet werden.

Beispiele für die Anwendung derartiger Metallverbundelemente sind ebene oder linierte Wandelemente sowie profilierte Dachelemente für den Industriehallen- und Kühlhausbau ebenso wie für LKW-Aufbauten, Hallentüren oder Transportcontainer.

Die Herstellung dieser Metallverbundelemente kann kontinuierlich oder diskontinuierlich erfolgen. Vorrichtungen zur kontinuierlichen Herstellung sind z.B. aus DE 1 609 668 A oder DE 1 247 612 A bekannt.

Unter Verwendung der erfindungsgemäßen Polyurethan-/Polyisocyanurat-Schäume hergestellte Metallverbundelemente können beispielsweise gemäß EN 13823 einen Wert für die Gesamtrauchentwicklung nach 600 Sekunden TSP₆₀₀ von ≥ 45 m² bis ≤ 60 m² aufweisen. Der TSP₆₀₀-Wert kann auch ≥ 46 m² bis ≤ 58 m² oder ≥ 47 m² bis ≤ 55 m² betragen. Weiterhin können solche Metallverbundelemente gemäß EN 13823 einen Wert für die Rauchentwicklung SMOGRA von ≥ 1 m²/s² bis ≤ 10 m²/s², bevorzugt von ≥ 2 m²/s² bis ≤ 8 m²/s², besonders bevorzugt von ≥ 3 m²/s² bis ≤ 6 m²/s² aufweisen.

Ein weiterer Gegenstand der vorliegenden Erfindung ist ein Metallverbundelement, umfassend eine Metallschicht und Schicht, die die erfindungsgemäßen Polyurethan-/Polyisocyanurat-Schäume umfasst. Näheres zu Metallverbundelementen wurde bereits im Zusammenhang mit der Verwendung des erfindungsgemäßen Schaums ausgeführt.

Die vorliegende Erfindung wird anhand der nachfolgenden Beispiele näher erläutert.

### Beispiele:

### Zusammenstellung der in den Beispielen verwendeten Rohstoffe

| | |
|---|---|
| Phthalsäureanhydrid (PSA): | Technisches PSA der Fa. Lanxess Deutschland GmbH |
| Adipinsäure: | Adipinsäure der Fa. BASF |
| Diethylenglykol (DEG): | DEG der Fa. Ineos |
| Ethylenglykol (EG): | EG der Fa. Ineos |
| Zinn-II-Chlorid-dihydrat | der Fa. Aldrich |

### Beispiel 1

### Synthese des Polyesters A3)

In einer Apparatur nach Beispiel 1 wurden unter Stickstoffüberschleierung bei 180°C 1444 g (9,76 Mol) PSA vorgelegt und 1193 g (11,26 Mol) Diethylenglykol langsam zugegeben. Nach 1 Stunde wurde die Temperatur auf 150°C erniedrigt. Es wurden 356 g (2,44 Mol) Adipinsäure und 429 g (6,92 Mol) EG zugeben und bei 200°C für 3 Stunden abreagiert. Es wurden 65 mg Zinn-II-Chlorid-dihydrat zugegeben und der Druck auf 300 mbar verringert. Im Verlauf weiterer 5 Stunden verringerte man kontinuierlich den Druck auf zuletzt 80 mbar und vervollständigte die Reaktion bis zu einer Gesamtlaufzeit von 21 Std. Während der gesamten Umsetzung wurden Destillate in einer mit Trockeneis gekühlten Vorlage gesammelt. Man bestimmte die Hydroxylzahl zu 199 mg KOH/g (berechnet: 212 mg KOH/g), setzte 160 g (1,51 Mol) Diethylenglykol nach und äquilibrierte bei Normaldruck und 200°C für 5 Stunden.
Analyse des Polyesters:
Hydroxylzahl: 239,7 mg KOH/g
Säurezahl: 2,1 mg KOH/g

### Beispiele zur Herstellung eines PUR/PIR-Hartschaums:

### Eingesetzte Komponenten:

### Polyesterpolyole aus dem Beispiel 1

TCPP, Tris(1-chloro-2-propyl)-phosphat der Fa. Lanxess GmbH, Deutschland.

TEP, Triethylphosphat der Fa. Levagard.

Stabilisator, Polyetherpolysiloxancopolymerisat der Fa. Evonik.
Carbonsäuresalz (PIR-Katalysator): Desmorapid® VP.PU 30HB13A der Fa. Bayer MaterialScience AG, Leverkusen, Deutschland
Carbonsäuresalz (PIR-Katalysator): Desmorapid® 1792 der Fa. Bayer MaterialScience AG, Leverkusen, Deutschland.
Desmophen® VP.PU 1907 : Polyetherpolyol auf Basis von o-Toluylendiamin, Propylenoxid und Ethylenoxid mit einer OH-Zahl von 460 mg KOH/g gemäß DIN 53240 der Fa. Bayer MaterialScience AG, Leverkusen, Deutschland.
Additiv 1132: Polyesterpolyol aus Phthalsäureanhydrid und Diethylenglykol, OH-Zahl 795 mg KOH/g der Fa. Bayer MaterialScience AG, Leverkusen, Deutschland.
Desmodur® VP.PU 44V70L, polymeres Polyisocyanat auf Basis 4,4'-Diphenylmethandiisocyanat mit einem NCO-Gehalt von ca. 31,5 Gew.-% der Fa. Bayer MaterialScience AG, Leverkusen, Deutschland.

Im Labormaßstab werden alle Rohstoffe der Hartschaumrezeptur mit Ausnahme der Polyisocyanatkomponente in einem Pappbecher eingewogen, auf 23°C temperiert, mittels eines Pendraulik-Labormischers (z.B. Type LM-34 der Fa. Pendraulik) vermischt und verflüchtigtes Treibmittel (Pentan) ggf. ergänzt. Anschließend wurde unter Rühren die Polyisocyanatkomponente (ebenfalls auf 23°C temperiert) zur Polyolmischung gegeben, diese intensiv vermischt und das Reaktionsgemisch in Formen gegossen, die mit metallischen Deckschichten (Fa. Corus) ausgelegt sind. Nach 2,5 Minuten wurde die Schaumhärte mittels einer Eindruck-Methode und nach 8-10 Minuten die maximale Kerntemperatur bestimmt. Es wurde für mindestens weitere 24 Stunden bei 23°C nachreagieren gelassen und anschließend folgende Eigenschaften bestimmt:
BVD-Test entsprechend Schweizer Grundtest zur Ermittlung des Brennbarkeitsgrades von Baustoffen der Vereinigung kantonaler Feuerversicherungen in der Ausgabe von 1988, mit den Nachträgen von 1990, 1994,1995 und 2005. (zu beziehen bei Vereinigung kantonaler Feuerversicherungen, Bundesstr. 20, 3011 Bern, Schweiz).

**Tabelle 1: Rezeptur der Schaumsysteme**

| Beispiel | | 2 | 3 | 4 |
|---|---|---|---|---|
| Komponente: | | | | |
| Polyesterpolyol aus Bsp. 1 | [Tle.] | 64 | 64 | 64 |
| Polyetherpolyol basierend auf TMP und Ethylenoxid, Funktionalität 2, OH-Zahl 240 mg KOH/g | [Tle.] | 5 | 0 | 0 |
| Desmophen® VP.PU 1907 | [Tle.] | 0 | 5 | 5 |
| Additiv 1132 | [Tle.] | 2,2 | 2,2 | 2,2 |
| Tris(1-chloro-2-propyl)-phosphat, TCPP | [Tle.] | 20 | 20 | 20 |
| Triethylphosphat, TEP | [Tle.] | 5 | 5 | 5 |
| Stabilisator | [Tle.] | 6 | 6 | 6 |
| Pentan | [Tle.] | 13,7 | 13,7 | 13,7 |
| Desmorapid® VP.PU 30HB13A | [Tle.] | 3,4 | 3,4 | 3,4 |
| Desmorapid® 1792 | [Tle.] | 0 | 0 | 0 |
| Desmodur® 44V70L | | + | + | + |
| Index (Kennzahl) | | 360 | 360 | 360 |

Die nach den Beispielen 2 bis 4 hergestellten Metallverbundelemente wurden für 14 h bei - 20 °C gelagert. Die Metallverbundelemente weisen eine Größe von 1m mal 4 m auf. Die Bestimmung der Dicke erfolgte mit Hilfe eines Messschiebers im Abstand von 300 mm von der Originalschnittkante.

Für ein Metallverbundelement, das einen nach Beispiel 2 hergestellten Schaum enthält, ergibt sich in einer Versuchsreihe von 10 Versuchen eine durchschnittliche Abweichung von 3,4 mm von der ursprünglichen Dicke von 200 mm. Für ein Metallverbundelement, das einen nach Beispiel 3 hergestellten Schaum enthält, ergibt sich in einer Versuchsreihe von 10 Versuchen eine durchschnittliche Abweichung von 2,1 mm von der ursprünglichen Dicke von 200 mm. Für ein Metallverbundelement, das einen nach Beispiel 4 hergestellten Schaum enthält, ergibt sich in einer Versuchsreihe von 10 Versuchen eine durchschnittliche Abweichung von 1,9 mm von der ursprünglichen Dicke von 200 mm.

Aus den vorstehend beschriebenen Beispielen ist ersichtlich, dass Metallverbundelemente, die die erfindungsgemäßen Polyurethan-/Polyisocyanurat-Schaum enthalten, eine höhere Dimensionsstabilität aufweisen.

Die erfindungsgemäßen Hartschäume aus den Beispielen 3 und 4 wurden weiterhin bezüglich des Brandverhaltens im Single Burning Item (SBI)-Test gemäß EN 13823 überprüft Hierzu wurden handelsübliche Metallverbundelemente mit erfindungsgemäßen Hartschaum gemäß Beispiel 3 bzw. 4 hergestellt und dem Test unterworfen. Beim FIGRA-Wert (fire growth rate; Feuerausbreitungsgeschwindigkeit) ist eine Einstufung der Metallverbundelemente in die Klasse B möglich. Im Fall des THR₆₀₀-Werts (total heat release; Gesamtwärmefreisetzung nach 600 Sekunden) wird eine Einstufung in die Klasse S2 erreicht. Die Metallverbundelemente mit den erfindungsgemäßen Hartschäumen zeigen damit eine Feuerbeständigkeit, die der Feuerbeständigkeit von kommerziell erhältlichen Metallverbundelementen vergleichbar ist.

## Patentansprüche

1. Polyurethan-/Polyisocyanurat-Schaum, erhältlich aus der Reaktion von
A) einer isocyanatreaktiven Zusammensetzung umfassend
A1) 0 bis 15 Gew.-% wenigstens eines Polyesterpolyols mit einer Hydroxylzahl im Bereich von 300 mg KOH/g bis 1000 mg KOH/g bestimmt gemäß DIN 53240,
A2) 1 bis 15 Gew.-% wenigstens eines Polyetherpolyols mit einer Hydroxylzahl im Bereich von 300 mg KOH/g bis 600 mg KOH/g bestimmt gemäß DIN 53240
und
A3) 50 bis 70 Gew.-% wenigstens eines Polyesterpolyols mit einer Hydroxylzahl im Bereich von 80 mg KOH/g bis 290 mg KOH/g bestimmt gemäß DIN 53240,
wobei die Angaben in Gew.-% jeweils auf alle Komponenten der isocyanatreaktiven Zusammensetzung A) bezogen sind;
mit
B) einer Polyisocyanatkomponente,
wobei das Äquivalentverhältnis von NCO-Gruppen zur Summe der gegenüber NCO-Gruppen reaktiven Wasserstoffatome ≥ 150:100 bis ≤ 500:100 beträgt,
**dadurch gekennzeichnet, dass** das Polyetherpolyol A2) ein mit einem aromatischen Amin gestartetes Polyetherpolyol A2) ist.

2. Polyurethan-/Polyisocyanurat-Schaum gemäß Anspruch 1, **dadurch gekennzeichnet, dass** das Äquivalentverhältnis von NCO-Gruppen zur Summe der gegenüber NCO-Gruppen reaktiven Wasserstoffatome ≥ 150:100 bis ≤ 400:100 beträgt

3. Polyurethan-/Polyisocyanurat-Schaum gemäß Anspruch 1, **dadurch gekennzeichnet, dass** die isocyanatreaktive Zusammensetzung 1 bis 10 Gew.-% wenigstens eines Polyesterpolyols A1), 1 bis 10 Gew.-% wenigstens eines Polyetherpolyols A2) und 50 bis 70 Gew.-% wenigstens eines Polyesterpolyols A3) umfasst.

4. Polyurethan-/Polyisocyanurat-Schaum gemäß Anspruch 1, **dadurch gekennzeichnet, dass** Polyisocyanatkomponente B) ein Gemisch von Diphenylmethan-4,4'-diisocyanat mit Isomeren und höherfunktionellen Homologen umfasst.

5. Polyurethan-/Polyisocyanurat-Schaum gemäß Anspruch 1, **dadurch gekennzeichnet, dass** die isocyanatreaktive Zusammensetzung Trimerisierungskatalysatoren D) ausgewählt aus der Gruppe bestehend aus Ammonium-, Alkali- und Erdalkalimetallsalzen von Carbonsäuren aufweist.

6. Polyurethan-/Polyisocyanurat-Schaum gemäß Anspruch 1, **dadurch gekennzeichnet, dass** das aromatische Amin aus der Gruppe bestehend aus Toluylendiamin, Diaminodiphenylmethan und Polymethylen-polyphenylen-polyamin ausgewählt wird.

7. Verwendung eines Polyurethan-/Polyisocyanurat-Schaum gemäß einem oder mehreren der Ansprüche 1 bis 6 zur Herstellung eines Verbundelementes.

8. Verbundelement umfassend wenigstens eine Deckschicht und wenigstens eine Schicht, die einen Polyurethan-/Polyisocyanurat-Schaum gemäß einem oder mehreren der Ansprüche 1 bis 6 umfasst.

9. Verbundelement gemäß Anspruch 8, wobei die Deckschicht eine Metallschicht ist.

10. Verfahren zur Herstellung von Verbundelementen, wobei in wenigstens einem Schritt eine Reaktionsmischung enthaltend die Komponenten A) und B) gemäß Anspruch 1 auf eine Deckschicht aufgetragen wird.

11. Verfahren gemäß Anspruch 10, wobei die Deckschicht eine Metallschicht ist.

12. Verfahren gemäß Anspruch 10, wobei das Verfahren als Doppeltransportbandverfahren ausgestaltet ist.

## Claims

1. Polyurethane/polyisocyanurate foam obtainable from the reaction of
A) an isocyanate-reactive composition comprising
A1) from 0 to 15 wt% of at least one polyester polyol having a hydroxyl number in the range from 300 mg KOH/g to 1000 mg KOH/g as determined according to DIN 53240,
A2) from 1 to 15 wt% of at least one polyether polyol having a hydroxyl number in the range from 300 mg KOH/g to 600 mg KOH/g as determined according to DIN 53240
and
A3) from 50 to 70 wt% of at least one polyester polyol having a hydroxyl number in the range from 80 mg KOH/g to 290 mg KOH/g as determined according to DIN 53240,
where the figures in wt% are based in each case on all the components of the isocyanate-reactive composition A);
with
B) a polyisocyanate component,
where the equivalents ratio of NCO groups to the sum total of hydrogen atoms reactive towards NCO groups is ≥ 150:100 to ≤ 500:100,
**characterized in that** the polyether polyol A2) is a polyether polyol A2) started with an aromatic amine.

2. Polyurethane/polyisocyanurate foam according to Claim 1, **characterized in that** the equivalents ratio of NCO groups to the sum total of hydrogen atoms reactive towards NCO groups is ≥ 150:100 to ≤ 400:100.

3. Polyurethane/polyisocyanurate foam according to Claim 1, **characterized in that** the isocyanate-reactive composition comprises 1 to 10 wt% of at least one polyester polyol A1), 1 to 10 wt% of at least one polyether polyol A2) and 50 to 70 wt% of at least one polyester polyol A3).

4. Polyurethane/polyisocyanurate foam according to Claim 1, **characterized in that** polyisocyanate component B) comprises a mixture of diphenylmethane 4,4'-diisocyanate with isomers and homologues of higher functionality.

5. Polyurethane/polyisocyanurate foam according to Claim 1, **characterized in that** the isocyanate-reactive composition comprises trimerization catalysts D) selected from the group consisting of ammonium salts, alkali metal salts and alkaline earth metal salts of carboxylic acids.

6. Polyurethane/polyisocyanurate foam according to Claim 1, **characterized in that** the aromatic amine is selected from the group consisting of tolylenediamine, diaminodiphenylmethane and polymethylene-polyphenylene-polyamine.

7. Use of a polyurethane/polyisocyanurate foam according to one or more of Claims 1 to 6 for producing a composite element.

8. Composite element comprising at least one outer layer and at least one layer which comprises a polyurethane/polyisocyanurate foam according to one or more of Claims 1 to 6.

9. Composite element according to Claim 8, where the outer layer is a metal layer.

10. Method for producing composite elements, where in at least one step a reaction mixture comprising the components A) and B) according to Claim 1 is applied to an outer layer.

11. Method according to Claim 10, where the outer layer is a metal layer.

12. Method according to Claim 10, where the method is configured as a twin conveyor belt method.

## Revendications

1. Mousse de polyuréthane/polyisocyanurate, pouvant être obtenue par la réaction de
A) une composition réactive avec les isocyanates, comprenant :
A1) 0 à 15 % en poids d'au moins un polyester-polyol ayant un indice hydroxyle dans la plage allant de 300 mg KOH/g à 1 000 mg KOH/g déterminé selon DIN 53240,
A2) 1 à 15 % en poids d'au moins un polyéther-polyol ayant un indice hydroxyle dans la plage allant de 300 mg KOH/g à 600 mg KOH/g déterminé selon DIN 53240,
et
A3) 50 à 70 % en poids d'au moins un polyester-polyol ayant un indice hydroxyle dans la plage allant de 80 mg KOH/g à 290 mg KOH/g déterminé selon DIN 53240,
les données en % en poids se rapportant à chaque fois à tous les composants de la composition réactive avec les isocyanates A) ;
avec
B) un composant polyisocyanate,
le rapport équivalent entre les groupes NCO et la somme des atomes d'hydrogène réactifs avec les groupes NCO étant de ≥ 150:100 à ≤ 500:100,
**caractérisée en ce que** le polyéther-polyol A2) est un polyéther-polyol A2) démarré avec une amine aromatique.

2. Mousse de polyuréthane/polyisocyanurate selon la revendication 1, **caractérisée en ce que** le rapport équivalent entre les groupes NCO et la somme des atomes d'hydrogène réactifs avec les groupes NCO est de ≥ 150:100 à ≤ 400:100.

3. Mousse de polyuréthane/polyisocyanurate selon la revendication 1, **caractérisée en ce que** la composition réactive avec les isocyanates comprend 1 à 10 % en poids d'au moins un polyester-polyol A1), 1 à 10 % en poids d'au moins un polyéther-polyol A2 et 50 à 70 % en poids d'au moins un polyester-polyol A3).

4. Mousse de polyuréthane/polyisocyanurate selon la revendication 1, **caractérisée en ce que** le composant polyisocyanate B) comprend un mélange de 4,4'-diisocyanate de diphénylméthane avec des isomères et des homologues de fonctionnalité supérieure.

5. Mousse de polyuréthane/polyisocyanurate selon la revendication 1, **caractérisée en ce que** la composition réactive avec les isocyanates comprend des catalyseurs de trimérisation D) choisis dans le groupe constitué par les sels d'ammonium, de métaux alcalins et alcalino-terreux d'acides carboxyliques.

6. Mousse de polyuréthane/polyisocyanurate selon la revendication 1, **caractérisée en ce que** l'amine aromatique est choisie dans le groupe constitué par la toluylène-diamine, le diaminodiphénylméthane et la polyméthylène-polyphénylène-polyamine.

7. Utilisation d'une mousse de polyuréthane/polyisocyanurate selon une ou plusieurs des revendications 1 à 6 pour la fabrication d'un élément composite.

8. Élément composite comprenant au moins une couche de recouvrement et au moins une couche qui comprend une mousse de polyuréthane/polyisocyanurate selon une ou plusieurs des revendications 1 à 6.

9. Élément composite selon la revendication 8, dans lequel la couche de recouvrement est une couche métallique.

10. Procédé de fabrication d'éléments composites, selon lequel un mélange réactionnel contenant les composants A) et B) selon la revendication 1 est appliqué sur une couche de recouvrement lors d'au moins une étape.

11. Procédé selon la revendication 10, selon lequel la couche de recouvrement est une couche métallique.

12. Procédé selon la revendication 10, selon lequel le procédé est configuré sous la forme d'un procédé à bande de transport double.
